# EUROPEAN PATENT APPLICATION

(11) **EP 4 800 556 A1**
(43) Date of publication of application: **02.09.2026**
(21) Application number: 25382188.8
(22) Date of filing: 28.02.2025
(51) Int. Cl.: G06F 9/50, G06F 11/00, G06F 11/34

(54) **IMPROVED COMPUTER RESOURCE ALLOCATION**

(71) Applicant: Vodafone Group Services Limited, Newbury RG14 2FN (GB)
(72) Inventor: DARIOL, Vaifro, London, W2 6BY (GB)
(74) Representative: Boult Wade Tennant LLP

(57) **Abstract**

Method and system for allocating computing resources in a computing system comprising. Determining a current available capacity of one or more computing resources. Determining a current rate of change of computing resource use based on historical data. Calculating a first time for available capacity of the one or more computing resources to reach a threshold value based on the determined current rate of change of the one or more computing resources and the current available capacity. Determining a second time required to activate additional computer resources. When it is determined that the second time is equal to or greater than the first time initiating the activation of the additional computer resources.

## Description

### Field of the Invention

The present disclosure relates to a system and method for allocating computing resources. In particular, the disclosure describes allocating and managing computing resources in a telecommunications network, and especially radio access network (RAN) computing resources such as servers and CPU cores.

### Background of the Invention

Efficient resource allocation in computing environments is essential for optimising performance and energy consumption. Current methods can lead to situations where too many computing resources are allocated to avoid occasional brief insufficiencies of processing availability, leading to inefficient power use. However, too few allocated resources may be allocated leading to bottle necks and missed service level agreement (SLA) targets.

Optimal computing resource allocation can be especially important in telecommunications network environments, especially where different mobile virtual network operators (MVNO) share the same infrastructure (e.g., gNodeBs or base stations) and use virtualised server and resource environments, like Open RAN. Under these conditions, it may be necessary to resource computer systems assuming that each MVNO will experience peak demand at the same time, however rarely this occurs. However, this leads to allocated resources remaining idle for much of the time.

Therefore, there is required a method and system that overcomes these problems.

### Summary of the Invention

Efficient resource allocation in computing environments is essential for optimising performance and energy consumption. Current systems and methods overlook the dynamic nature of resource availability, the varying times required to activate different resources, and historical computation requirements. The present described system and method consider available capacity, wake-up time requirements, allocation time, initiation time, and/or maximum historical computation requirement increases to enhance resource allocation.

The system monitors a current usage of computing resources and any available contingency or capacity. For example, the system may have five servers allocated to a particular task or set of tasks. If the servers are effectively load-balanced with each operating at around 80% capacity (e.g., CPU load) then the system may have around 20% spare capacity. Alternatively, this spare capacity may be defined as an effective 100% of one server.

Historical data is used to determine when this spare capacity in a computer system or network will reach or fall to or below a particular threshold (e.g., spare capacity reaching 0%, 5%, 10%, 15%, etc.). For example, data may be collected over time, times of day, days of the week, etc. These data can be used to calculate or estimate a particular time (e.g., from when the calculation takes place) to when the threshold will be reached or breached. Separately, the system determines how long it can take from initiation to when new resources can become available to execute or process the same task or set of tasks (or future tasks) being handled by the current servers or cores. For example, a server may be allocated to a different task. To change allocation of a resource may require the data of the current task to be stored (e.g., the server to enter a re-startable hibernation). In a virtualised environment, a new server may be instantiated (e.g., booted). In any case, such actions may take tens of seconds to several minutes.

This can be described as an initialisation or initiation time for one or more computing resources (even though the resource may start this initialisation or initiation in an active state). This initiation time may be fixed (e.g., a constant time for a server to boot) or may be dependent on the present task being handled by a server to be migrated. Therefore, the system can monitor and/or estimate this initialisation time.

When the historical data indicates that the threshold will be reached or breached in a time (i.e., from now), and when this time is equal to or less than the initialisation time for a computer resource then initialisation of the additional computing resources is triggered. Therefore, the system does not wait until a zero capacity, or a safe level of computing capacity has been reached before starting to provide new computing resources but does so in advance of this. This process does not start too early and not too late but at a more optimised time. Furthermore, the system does not need to allocate computing resources when they are not required as the system can see and plan ahead so that the optimum amount (not too much or too little) of computing resource is always available when needed. This provides improved efficiency and a way of optimising the performance of a computing system. Furthermore, excess computing resources may even be shut down with resource demands are increasing so long as the system can still shut down and start up resources before they are expected to be needed.

In accordance with a first aspect there is provided a method for allocating computing resources in a computing system, the method comprising:
determining a current available capacity of one or more computing resources;
determining a current rate of change of computing resource use based on historical data;
calculating a first time for available capacity of the one or more computing resources to reach a threshold value based on the determined current rate of change of the one or more computing resources and the current available capacity;
determining a second time required to activate additional computer resources; and
when it is determined that the second time is equal to or greater than the first time initiating the activation of the additional computer resources. Therefore, computing resources can be allocated more efficiently by ensuring that additional resources are available when required by only activating additional resources to ensure that they become available when needed and not before.

Optionally, method steps may iterate at intervals. The intervals can be regular intervals, such as every second, few seconds or minutes, for example. This ensures that the expected resources requirements are constantly re-evaluated so that additional computer resources are allocated when required. The method steps may also iterate at non-regular intervals and/or prompted or triggered by an action or event (e.g., a detected surge in computing usage).

Optionally, the one or more computing resources may be servers. Servers can take a particularly long time to activate, be reallocated, or boot. The servers may be cloud computing servers, physical servers or any other server-type. Therefore, the method and system have particular benefits for server resource allocation. However, other computing resources can be managed in this way.

Optionally, the time to activate the additional computer resources may be the time to boot a server or the time to hibernate a server used for an external task. Servers may be allocated from existing tasks or instantiated or booted from idle.

Optionally, the one or more computing resources may be central processing unit (CPU) cores. CPU cores may require less time to be allocated or activated from idle than servers. However, making the correct number of cores available, when necessary, can further improve system performance.

Optionally, the current available capacity may be a number of available CPU cores.

Optionally, the step of determining a current rate of change of computing resource use may further comprise providing a machine learning model with the historical data. The historical data may include data such as the volume of computing resources required or used at particular times of day, days of the week, times of the year, etc. A machine learning model may use such information to develop a model that can simulate or predict the required computing resources in the future (e.g., the near future, such as the coming seconds or minutes).

Optionally, the one or more computing resources may radio access network, RAN, resources. RAN or open RAN resource allocation and management may be particularly important for meeting telecommunication requirements, especially when such resources are shared between operators at a particular location, such as a base station or gNodeB.

Optionally, the method may further comprise when the current rate of change of computing resource use is determined to be negative (i.e., a reduction in demand), executing a process to release one or more computing resources in the computing system. This frees up resources when they are no longer required, which can be reallocated when the rate of change returns to a positive value. The process can continue indefinitely, if necessary.

Optionally, the method may further comprise:
determining a third time to release a computing resource in the computing system;
when the sum of the second and third times is greater than the first time, release the computing resource. The system and method can then monitor the amount of time necessary to release or deactivate a computing resource.

Preferably, after releasing the computing resource, repeating:
determining a current available capacity of one or more computing resources;
determining a current rate of change of computing resource use based on historical data;
calculating a first time for available capacity of the one or more computing resources to reach a threshold value based on the determined current rate of change of the one or more computing resources and the current available capacity; and
when it is determined that the second time is equal to or greater than the first time initiating the activation of the additional computer resources. When the time to release (or deactivate) and reclaim (or activate) a particular (or a current top) computing resource is less than the time when the predicted available capacity will reach the threshold value, i.e., a threshold value of zero or above in whatever units are used to measure computing capacity (e.g., number of servers, number of cores, memory, storage, etc.), then this presents an opportunity to shut down or release excess computing resources (even if the time spent released or shut down is short). This is because there will still be time to reallocate or active the computing resource after it has been released if this becomes necessary. Even shutting down briefly and starting up shortly afterwards can provide efficiency or resource allocation enhancements.

Optionally, determining the time required to activate the additional computer resource may be based on historical data and/or the current available capacity. The time may be a fixed period (e.g., stored in memory) or may be dynamic based on external factors like the number of current servers or CPU cores that are operating, for example.

Optionally, the threshold value may be a non-zero value. When the threshold value is zero then the additional computing resources should become available exactly when required (or predicted). However, the historical data may not reflect the current resource requirements. Therefore, a non-zero threshold provides some contingency in case the demand rises faster than can be predicted by the historical data or additional, unexpected tasks need to be carried out. The size of the contingency can be used to balance the risk of not meeting future demand with the risk of allocating computing resources too early leading to active computing resources remaining idle for longer. The size of the contingency or non-zero threshold may be dependent on the time required to activate additional or new computing resources. A zero-threshold value may be used to make the system and method operate as efficiently as possible but with the risk that unexpected demand may outstrip capacity at some times.

The method may be repeated even during the time that a resource is starting up or being.

Optionally, determining the second time required to activate additional computer resources may further comprises including a contingency time. This can be used instead of or as well as a non-zero threshold value to ensure that capacity is always sufficient to meet computing demands.

According to a second aspect, there is provided an apparatus, a system or a computer system comprising:
one or more processors; and
at least one memory storing computer-executable instructions that, when executed by the one or more processors, cause the apparatus to allocate computing resources by:
   determining a current available capacity of one or more computing resources;
   determining a current rate of change of computing resource use based on historical data;
   calculating a first time for available capacity of the one or more computing resources to reach a threshold value based on the determined current rate of change of the one or more computing resources and the current available capacity;
   determining a second time required to activate additional computer resources; and
   when it is determined that the second time is equal to or greater than the first time initiating the activation of the additional computer resources.

Optionally, the apparatus may be a base station of a telecommunications network. Other apparatus types may be used.

According to a third aspect, there is provided at least one non-transitory computer-readable medium storing instructions that, when read by one or more processors, cause the one or more processors to:
determining a current available capacity of one or more computing resources;
determine a current rate of change of computing resource use based on historical data;
calculate a first time for available capacity of the one or more computing resources to reach a threshold value based on the determined current rate of change of the one or more computing resources and the current available capacity;
determine a second time required to activate additional computer resources; and
when it is determined that the second time is equal to or greater than the first time initiate the activation of the additional computer resources.

Determining the current rate of change of computing resource based on historical data may use an artificial intelligence (AI) model. The system and method may develop the Al model over time and/or it may be trained on historical data.

Optionally, determining the second time required to activate additional computer resources may further comprise including a verification period. This can be used instead of or as well as a non-zero threshold value to ensure that capacity is always sufficient to meet computing demands.

Optionally, the method may calculate a further (fourth) time to reach the current allowed processing capacity (with or without a threshold) without extra resources being allocated and if this is greater than the time to wake up or allocate a new resource, the management system may execute a process to release one or more computing resources in the managed computing system. This frees up resources when they are no longer required, which can be reallocated (or reallocated) when further processing requirements are required. The process can continue indefinitely, if necessary.

Optionally, the method may further comprise:
determining a fifth time to release and reallocate a computing resource in the computing system;
when the fourth time (i.e., time to reach allowed processing capacity) is greater than (or equal to) the fifth time, the computing resource can be released (even in the case of demand rising). The system and method can monitor and update the amount of time necessary to release or deactivate a computing resource.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX (RTM), Windows (RTM) or Linux (RTM), for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a flowchart of a method for allocating or managing computing resources;
FIG. 2 shows a schematic diagram of a computer system used to implement the method of Figure 1;
FIG. 3 shows a graphical representation of an example operation of the method of Figure;
FIG. 4 shows a graphical representation of a further example operation of the method of Figure 1; and
FIG. 5 shows a further flowchart of a method for allocating or managing computing resources.

It should be noted that the figures are illustrated for simplicity and are not necessarily drawn to scale. Like features are provided with the same reference numerals.

### Detailed description of the preferred embodiments

The present disclosure provides a method and system for managing or allocating resources in a computing environment. These resources may include server, CPU cores, RAM memory, HDD or SSD memory, GPU, or other resources. The method involves determining the available capacity of each resource, the time required to wake up, initiate, allocate or reallocate the next resource, and the historic maximum computation requirement increase per second or rate of change that the current resources are being expended. Based on these parameters, the method and system allocate resources to optimise performance and energy efficiency.

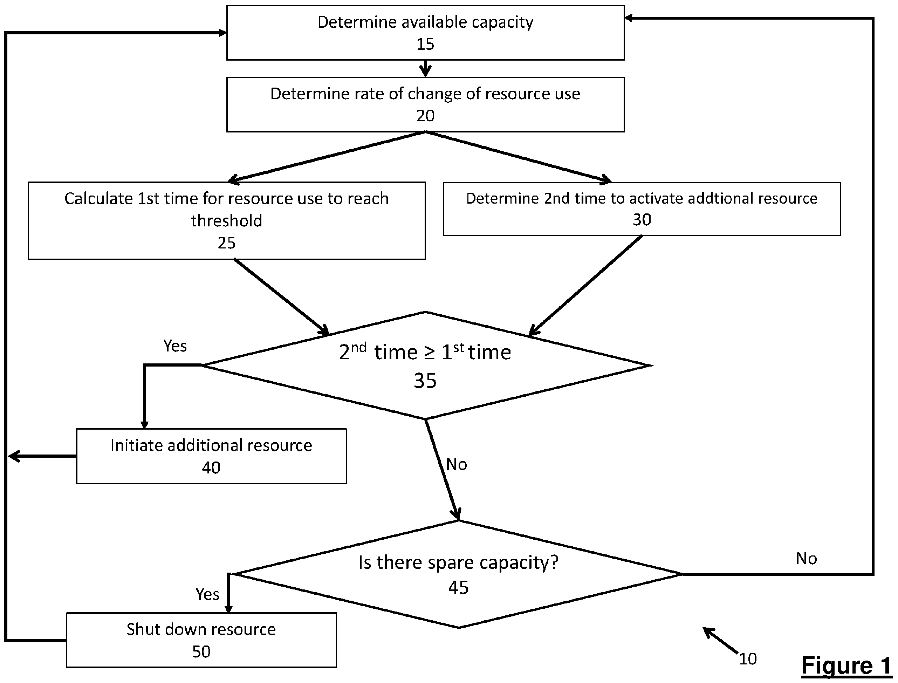

Figure 1 shows a flowchart of a method 10 for allocating or managing resources in a computer or telecommunications system. At step 15, a determination is made regarding the current or instant capacity available to the system, which may be a computing and/or telecommunications system. This information may take the form of a percentage of overall capacity (e.g., CPU utilisation percentage not being utilised) or as an absolute value (e.g., the number of core(s) not currently in use). Step 20 determines a rate of change of resource use. This may be determined based on historical data so that an expected rate of change over a particular time period (e.g., the next hour) is evaluated. For example, yesterday's utilisation data may indicate that in the next hour, utilisation will increase by 25%. The historical data may be constantly updated (dynamic data) or based on static data. Based on this expected rate of change, it can be calculated how long the current allocated resources (i.e., current computing resources allocated to a particular task, client, user, or set of tasks) will be able to meet expected demands or stay within a first threshold of a desired buffer (e.g., keeping a minimum of 10% spare capacity). The first threshold may be 0%, which does not provide any buffer but keeps resource use to a minimum.

From these calculations or predictions, it can be determined the time (first time) from the present moment that current resources will be inadequate to meet the expected demands or that a required free capacity threshold of 0%, 5%, 10%, 15%, 20%, 25%, 30%, etc. will be breached (step 30). At the same time, earlier or later, a separate assessment (step 25) is made to determine how long (second time) it will take for new computing resources to be allocated, reallocated, initiated or otherwise become available. The resources may include unallocated or idle resources or resources allocated to a different task that can be reallocated to the present task or tasks. An assessment or calculation is then be made determining whether the second time is equal to or greater than the first time (step 35). In other words, if initiated at that time (i.e., now), the newly allocated resources can start to execute or operate to process present task or tasks, ideally in time to prevent the free capacity threshold being breached. If the second time is greater than or equal to the first time ("yes" outcome from step 35), then the additional resource or resources are initiated, preferably immediately (step 40). In other words, a determination is made as to whether it will take longer to provide additional resources than the time for the current available resources to become inadequate. Separately, a calculation or determination may be made as to how many additional resources will be required (if this is greater than one). This optional step is not shown in this figure.

The method may stop at step 40, iterate back to step 15 (i.e., recalculate available capacity and add more resource if it is determined that more capacity will be required at or within the time taken to initiate new resources). The method may iterate back to step 15 (see the arrow from step 40 to step 15) whether or not resources are shut down to check (preferably at intervals, for example after a short delay) if further additional capacity will be required and so resources should be allocated in good time..

It may be that spare capacity can be released, e.g., the spare capacity is above a second higher threshold (providing a hysteresis avoiding constant initiation and shut down of resources). The method 10 may be implemented by the computer system that is being managed or by a separate computer system.

When it is determined that the time to reach the threshold is not less than or equal to the time for activating additional computing resources (the "no" outcome from step 35), it is determined that no additional resources need to be initiated (at least at this time). There may be excess or spare capacity in the system. This is determined at step 45. If there is spare capacity, e.g., over the second threshold (higher than the first threshold), the "yes" outcome from step 45, the method may determine that there will be enough allocated computing resource to maintain safe operation within the first threshold (excess capacity) if one or more computing resources are shut down (step 50). This may take place if the predicted resource requirements are falling (a negative rate of change) or even if this is rising (a positive rate of change). However, if the resource requirements are predicted to rise then the system can determine if there is sufficient time to shut down or reallocate away the excess computing resource and restart or regain allocation of the same or a new resource before the first threshold is expected to be breached.

As part of the shutdown process (step 50), a calculation may be made of a sum of shut down time (e.g., also determined based on historical data) and startup time and determining if this is less than or equal to the expected time for the first threshold to be reached. Again, there may be an optional (further) threshold applied so that shutting down excess capacity is only undertaken if it is expected that there will be a minimum time before an expected startup is required (the optional threshold time). If so, then the currently excess resource(s) can be shut down. The method 10 may repeat (return to step 15) and determine that the resource (or a replacement resource) should be restarted.

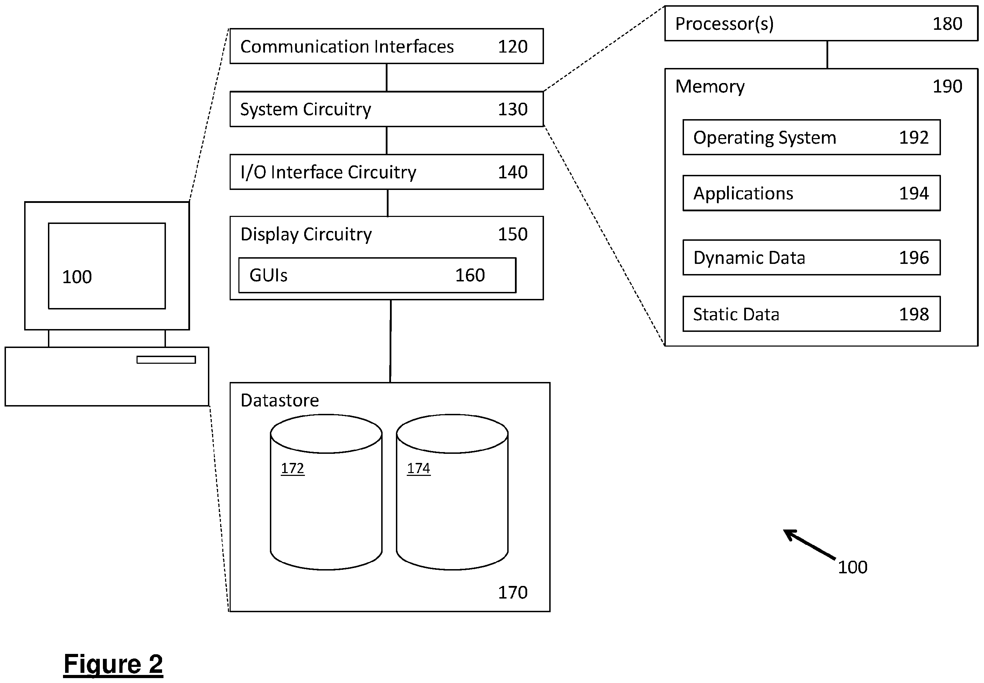

As shown in Figure 2, the computer system 100 may include a number of components including communication interfaces 120, system circuitry 130, input/output (I/O) circuitry 140, display circuitry and interfaces 150, and a datastore 170. The system circuitry 120 can include one or more processors or CPUs 180 and memory 190. The system circuitry 130 may include any combination of hardware, software, firmware, and/or other circuitry. The system circuitry 130 may be implemented, with one or more systems on a chip (SoC), application specific integrated circuits (ASIC), microprocessors, and/or analogue and digital circuits.

The display circuitry may provide one or more graphical user interfaces (GUIs) 160 and the I/O interface circuitry 140 may include touch sensitive or non-touch displays, sound, voice or other recognition inputs, buttons, switches, speakers, sounders, and other user interface elements. The I/O interface circuitry 140 may include microphones, cameras, headset and microphone input /output connectors, Universal Serial Bus (USB) connectors, and SD or other memory card sockets. The I/O interface circuitry 140 may further include data media interfaces (e.g., a CD-ROM or DVD drive) and other bus and display interfaces.

The memory 190 may include volatile (RAM) or non-volatile memory (e.g., ROM or Flash memory). The memory may store the operating system 192 of the computer system 100, applications or software 194, dynamic data 196, and/or static data 198. The datastore or data source 170 may include one or more databases 172, 174 and/or a file store or file system, for example.

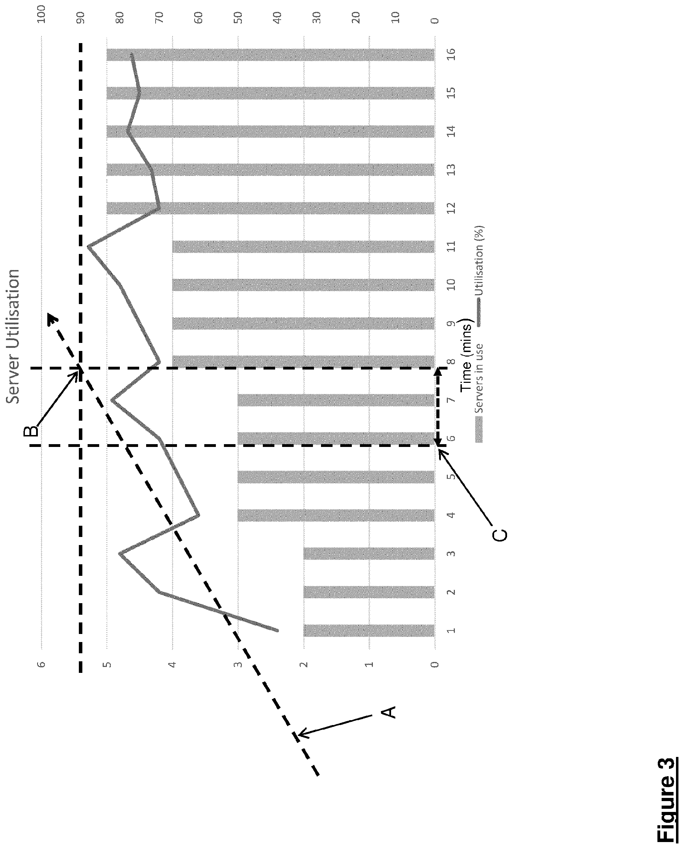

Figure 3 shows a graphical representation of example results from the operation of the method 10 described with reference to Figure 1. The graph has an x-axis of time in minutes and two scales for the y-axis. The first scale (bar graph scale) shows number of allocated servers (left side of the graph). The second scale shows a percentage of resource utilisation of currently allocated servers (right side of the graph). The percentage of resource utilisation is shown as a line graph.

A dotted line is illustrated along the 90% utilisation value. This represents an example 10% capacity threshold or buffer. Other values (including 0%) may be used. As can be seen in this figure, starting at time 0 minutes the resource percentage utilisation grows and then drops as a further server (from two to three servers) is brought online or allocated. The additional dotted lines A, B and C illustrate how and when a decision is made to initiate a further server (from three to four operational servers).

Dotted line A illustrates a rate of change of expected utilisation based on historical data. The utilisation plot roughly follows this line. The slope of the line may be determined by curve-fitting the data forming the utilisation plot, for example Following line A, it can be seen in advance that the future resource utilisation (that may also be based on current data such as the number of allocated servers or other resources) will reach the 90% utilisation point (or the 10% capacity threshold) at time eight minutes (point B on the graph). In this example, the time taken to allocate a new resource (a single server) is two minutes. Point B is expected to be reached at time eight minutes. Therefore, the fourth server is initiated at time six minutes (point C) to allow the two minutes startup time to be completed at or before the expected resource utilisation reaches 90% or the 10% resources capacity threshold.

When the fourth server becomes available, the computing resource utilisation again falls because new capacity has been added. System resource use climbs further (in this example) and a fifth server is **added** (again in advance of the expected breach of the 10% capacity threshold). As can be seen from Figure 3, resources (in this case servers) are only **added** when they are required and not too early or too late, taking into account the startup time and expected utilisation.

The graph of Figure 3 is only provided as an illustration. The time frames, number of resources and/or the threshold values may be altered for different implementations. If the computing resources are CPU cores, then the time frames may be much shorter (of the order of fractions of seconds or milliseconds). If the resources take longer to initiate or reallocate from one task to another (e.g., requiring large amounts of data to be stored from a current process) then the time frames may be 5-60 minutes, for example.

In an example implementation, the system 100 may be a part or component of the computer system being managed and monitored or may be separate from it (e.g., a management system managing one or more computer systems 100).

Further example details of the method 10 include the following. Determination of the current available capacity may include monitoring the current usage and availability of each resource. Calculating the available capacity may be based on predefined (or adjustable or dynamic) thresholds and real-time data obtained from the computer system being managed. This may include sensors, reporting messages, status flags, network messages, etc.

Determining the time to wake up the next or a new computing resource may include any or all of the following examples. The identify the next resources that can be activated. Determine a time required to wake up this resource based on its current state and historical data. For example, the resource may have different states (e.g. powered off, hibernated, stand-by, slow clock, power-saving, throttled down, etc.). The system may store historical data obtained by measuring the time take to reach an active state from any other state of the computing resource.

The method 10 and system 100 may store data indicating a historic maximum computation requirement increase per unit time (e.g., second, minute or hour). This can take the form of different types of data. For example, the system 100 and method may analyse the stored historical data to determine the maximum increase in computation requirements per unit of time. This can be used to predict future computation requirements and needs and adjust resource allocation accordingly.

The method may be described as a resource allocation algorithm. This uses a combination of information including the current available capacity, wake-up time (for a new or additional computing resource), and historical computation requirement data. The resource allocation algorithm may be optimised to allocate resources more efficiently by reducing delays or under resourced processing and reduce energy consumption.

The following provide examples relating to the management of the number of computer cores in a RAN implementation but may be extended to other computer resources.

Example 1: Current RAN traffic requires 1.5 cores, and there are currently three allocated cores. The current rate change (of demand) is one core every second. The time to activate core 4 is two seconds. This means that in two seconds the possible processing requirements will be 1.5 + 2 * 1 (current traffic requirements + time to activate core 4 * current change rate) and equals 3.5 cores. Therefore, the system determines that it needs to wake up core 4 now to have enough processing power (the contingency threshold in this example is zero but can be any value).

Example 2: Current RAN traffic requires 1.5 cores and there are currently three allocated cores. The current rate change (of demand) is one core every second. The time to deactivate and reactivate core 3 is 0.2s and the time to activate core 4 is 0.1s. This means that in 0.1 seconds the possible processing requirements will be 1.5 + 0.1 * 1 (current traffic requirements + time to activate core 4 * current change rate), which is equal to 1.6 cores. The system doesn't need to wake up core 4 now to have enough margin or capacity. Furthermore, 1.5 + 0.2 * 1 (current traffic requirements + time to activate core 3 * current change rate) is 1.7. The system calculates the difference between the currently allocated computing resources and the current demand. Therefore, this means that it is safe for the system switch off (or allocated elsewhere) core 3 now, as the system will have enough time to wake up a core (core 3) if needed. This frees up unnecessary resources without leading to under resourcing.

Artificial intelligence (AU) may be used to determine the rate at which computing resource demand or usage changes based on past or historical data. An Al model may also be used to determine a maximum rate of change. Historical data may be recorded and based on:
1) Hour of the day
   The data may be classified or associated with following parameters:
2) Working day or holiday/bank holiday
3) School day or non-school day
4) Weather condition
   a. expected rain in this hour (e.g., in the mm ranges [0, 0.1], [0.1, 1], [1,10], [10,100], [100, inf])
   b. expected temperature in this hour.
5) Site cluster:
   a. Urban
   b. Sub urban
   c. Rural
   d. Motorway

An Al agent may use a weighted average with coefficients trained by the specific computer system being managed (e.g., gNodeB or base station).

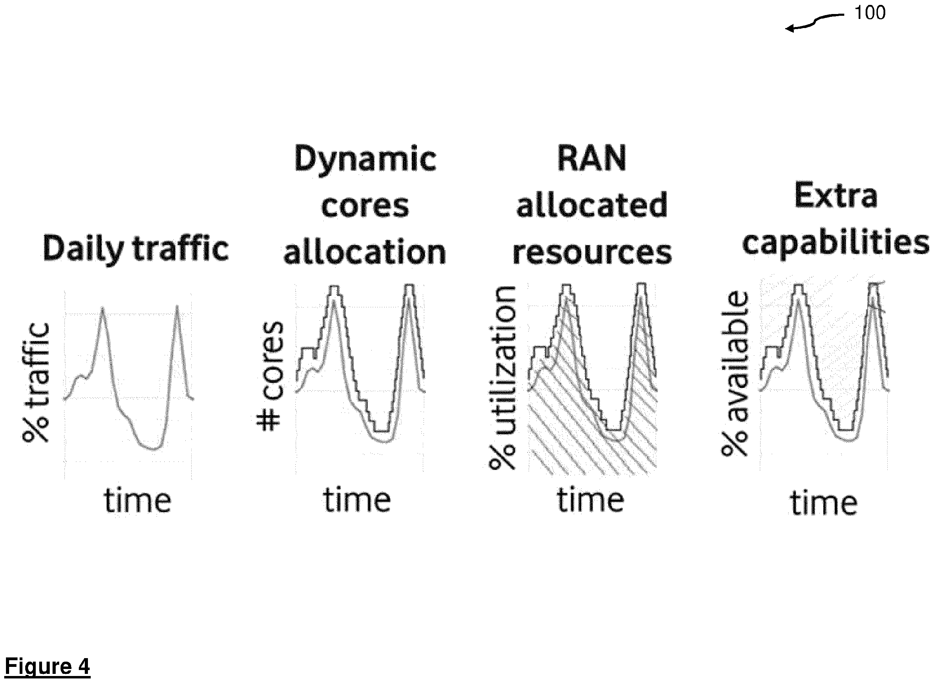

Figure shows a graphical representation of the historical computer system resource allocation and computing power demand (scaled the same). Figure 4 also illustrates how the computer system can be maintained to ensure there is always a contingency amount of computing resource allocated.

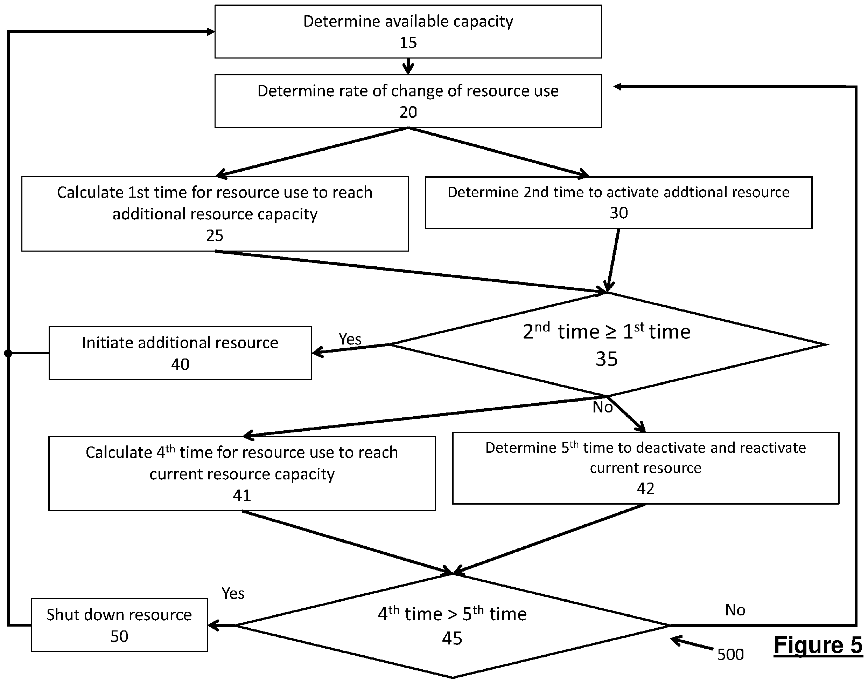

Figure 5 shows a further flowchart, illustrating an enhanced method 500 for allocating or managing resources in a computer or telecommunications system. Similar steps are included to those of the method 10 described with reference to Figure 1. At step 15, a determination is made regarding the current or instant capacity available to the system, which may be a computing and/or telecommunications system. This information may take the form of a percentage of overall capacity (e.g., CPU utilisation percentage not being utilised) or as an absolute value (e.g., the number of core(s) not currently in use). Step 20 determines a rate of change of resource use. This may be determined based on historical data so that an expected rate of change over a particular time period (e.g., the next hour) is evaluated. For example, yesterday's utilisation data may indicate that in the next hour, utilisation will increase by 25%. The historical data may be constantly updated (dynamic data) or based on static data. Based on this expected rate of change, it can be calculated how long the current allocated resources (i.e., current computing resources allocated to a particular task, client, user, or set of tasks) will be able to meet expected demands or stay within the first threshold of a desired buffer (e.g., keeping a minimum of 10% spare capacity). Again, the first threshold may be 0%, which does not provide any buffer but keeps resource use to a minimum.

From these calculations or predictions, it can be determined the time (first time) from the present moment that current resources will be inadequate to meet the expected demands or that a required free capacity threshold of 0%, 5%, 10%, 15%, 20%, 25%, 30%, etc. will be breached (step 30). At the same time, earlier or later, a separate assessment (step 25) is made to determine how long (second time) it will take for new computing resources to be allocated, reallocated, initiated or otherwise become available. The resources may include unallocated or idle resources or resources allocated to a different task that can be reallocated to the present task or tasks. An assessment or calculation can then be made determining whether the second time is equal to or greater than the first time (step 35). In other words, if initiated at that time (i.e., now), the newly allocated resources can start to execute or operate to process present task or tasks, ideally in time to prevent the free capacity threshold being breached. If the second time is greater than or equal to the first time ("yes" outcome from step 35), then the additional resource or resources are initiated, preferably immediately (step 40). Separately, a calculation or determination may be made as to how many additional resources will be required (if this is greater than one). This optional step is not shown in this figure.

The method may stop at step 40 or iterate back to step 15 (i.e., recalculate available capacity and add more resource if it is determined that more capacity will be required at or within the time taken to initiate new resources). If the second time is not greater than or equal to the first time (the "no" outcome from step 35), the method moves on to evaluation step 41 and 42 in parallel or in a serial sequence to calculate a fourth time for resource use to reach current resource capacity (e.g., within a threshold of zero or greater) and a fifth time to deactivate and reactivate current resource. When both calculations are available, the state flow moves to step 45 that determines if top (or any) computation capacity can be released. If spare capacity can be released, then resources may be shut down or allocated away from the current task, at step 50. The method may iterate back to step 15 (e.g., after a delay) whether or not resources are shut down to check (preferably at intervals) if further additional capacity will be required (or released) and so resources should be allocated in good time. The method 500 may be implemented by the computer system that is being managed or by a separate computer system 100.

Instead of or as well as determining if there is spare capacity (step 45), the method may determine that there will be enough allocated computing resource to maintain safe operation within the first threshold (excess capacity) if one or more computing resources are shut down (step 50). This may take place if the predicted resource requirements are falling (a negative rate of change) or even if this is rising (a positive rate of change). However, if the resource requirements are predicted to rise, then the system can determine if there is sufficient time to shut down or reallocate away the excess computing resource and restart or regain allocation of the same or a new resource before the first threshold (or required capacity) is expected to be breached. This can require calculating the sum of the shut down time (e.g., also determined based on historical data) and startup time and determining if this is less than or equal to the expected time for the first threshold to be reached. If so, then the currently excess resource can be shut down. The method 500 may repeat and determine that the resource (or a replacement resource) should be restarted.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element, and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, the resources may be computing resources other than CPU cores or servers. Memory, storage, bandwidth processing and other computing resources can be allocated in a similar way. The computing resources may be used within telecommunications networks, data centres, home and office environments, or anywhere else. The method may be used to allocated different types of resources that can be allocated and utilised.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

The following provides further illustrative examples:
1. A method for allocating resources in a computing environment, comprising:
   determining an available capacity of each resource;
   identifying the time required to wake up the next resource;
   analysing historical data to determine the maximum computation requirement increase per second; and
   allocating resources based on the available capacity, wake-up time, and historical computation requirement data to optimize performance and energy efficiency in order to have always the available computation resources even if not required at the current time.
2. The method of clause 1, wherein the available capacity is determined using real-time monitoring and predefined thresholds.
3. The method of clause 1 or clause 2, wherein the time to wake up the next resource is determined based on its current state on top of historical data.
4. The method according to any previous clause, wherein the historical computation requirement increase per second is determined by analysing past computation data.
5. The method according to any previous clause, further comprising an optimisation algorithm that combines the available capacity, wake-up time, and historical computation requirement data to allocate resources efficiently.
6. A method for allocating resources in a computing environment, considering the available capacity of resources, the time required to wake up the next resource, and the historic maximum computation requirement increase per second. This method optimizes performance and energy efficiency by dynamically adjusting resource allocation based on real-time and historical data.

## Claims

1. A method for allocating computing resources in a computing system, the method comprising:
determining a current available capacity of one or more computing resources;
determining a current rate of change of computing resource use based on historical data;
calculating a first time for available capacity of the one or more computing resources to reach a threshold value based on the determined current rate of change of the one or more computing resources and the current available capacity;
determining a second time required to activate additional computer resources; and
when it is determined that the second time is equal to or greater than the first time initiating the activation of the additional computer resources.

2. The method of claim 1, wherein the method steps iterate at intervals.

3. The method of claim 1 or claim 2, wherein the one or more computing resources are servers.

4. The method of claim 3, wherein the time to activate the additional computer resources is the time to boot a server or the time to hibernate a server used for an external task.

5. The method of claim 1 or claim 2, wherein the one or more computing resources are central processing unit, CPU, cores.

6. The method of claim 5, wherein the current available capacity is a number of available CPU cores.

7. The method according to any previous claim, wherein the step of determining a current rate of change of computing resource use further comprises providing a machine learning model with the historical data.

8. The method according to any previous claim, wherein the one or more computing resources are radio access network, RAN, resources.

9. The method according to any previous claim further comprising when the current rate of change of computing resource use is determined to be negative, executing a process to release one or more computing resources in the computing system.

10. The method according to any previous claim further comprising:
determining a third time to release a computing resource in the computing system;
when the sum of the second and third times is greater than the first time, release the computing resource.

11. The method of claim 10, wherein after releasing the computing resource, repeating:
determining a current available capacity of one or more computing resources;
determining a current rate of change of computing resource use based on historical data;
calculating a first time for available capacity of the one or more computing resources to reach a threshold value based on the determined current rate of change of the one or more computing resources and the current available capacity; and
when it is determined that the second time is equal to or greater than the first time initiating the activation of the additional computer resources.

12. The method according to any previous claim, wherein determining the time required to activate the additional computer resources is based on historical data and/or the current available capacity.

13. The method according to any previous claim, wherein the threshold value is a non-zero value.

14. The method according to any previous claim, wherein determining the second time required to activate additional computer resources further comprises including a contingency time.

15. An apparatus comprising:
one or more processors; and
at least one memory storing computer-executable instructions that, when executed by the one or more processors, cause the apparatus to allocate computing resources by:
determining a current available capacity of one or more computing resources;
determining a current rate of change of computing resource use based on historical data;
calculating a first time for available capacity of the one or more computing resources to reach a threshold value based on the determined current rate of change of the one or more computing resources and the current available capacity;
determining a second time required to activate additional computer resources; and
when it is determined that the second time is equal to or greater than the first time initiating the activation of the additional computer resources.

16. The apparatus of claim 15, wherein the apparatus is a base station of a telecommunications network.

17. At least one non-transitory computer-readable medium storing instructions that, when read by one or more processors, cause the one or more processors to:
determining a current available capacity of one or more computing resources;
determine a current rate of change of computing resource use based on historical data;
calculate a first time for available capacity of the one or more computing resources to reach a threshold value based on the determined current rate of change of the one or more computing resources and the current available capacity;
determine a second time required to activate additional computer resources; and
when it is determined that the second time is equal to or greater than the first time initiate the activation of the additional computer resources.
